# EUROPEAN PATENT APPLICATION

(11) **EP 3 184 424 A1**
(43) Date of publication of application: **28.06.2017**
(21) Application number: 16154604.9
(22) Date of filing: 08.02.2016
(51) Int. Cl.: B64C 27/10

(54) **MULTI-ROTOR PASSENGER-CARRYING AIRCRAFT**

(30) Priority: 25.12.2015 CN 201521115297 U
(71) Applicant: Guanghou Ehang Intelligent Technology Co., Ltd., Guangzhou Guangdong 510663 (CN)
(72) Inventor: DU, Hao, 510663 Guangzhou (CN); HU, Huazhi, 510663 Guangzhou (CN); LI, Zhiyi, 510663 Guangzhou (CN)
(74) Representative: Noble, Nicholas

(57) **Abstract**

A multi-rotor passenger-carrying aircraft, including an aircraft body with a passenger-carrying cabin and at least three aircraft arms arranged on the aircraft body. Each of the at least three aircraft arms is provided with a first propeller above the aircraft arm and driven to rotate by a first driving device, and a second propeller below the aircraft arm and driven to rotate by a second driving device. The aircraft can effectively reduce the area it occupies and meet the requirement of carrying capacity by arranging propellers of smaller size both above and below each aircraft arm instead of separately arranging a propeller of larger size on each aircraft arm in traditional means. Meanwhile, the multi-rotor passenger-carrying aircraft can implement various flight actions during flight by adjusting the rotate speed of the different driving devices respectively, which is convenient to control, with good maneuverability and controllability.

## Description

### FIELD

The present disclosure relates to the technical field of aircraft, and more particularly, to a multi-rotor passenger-carrying aircraft.

### BACKGROUND

The mankind always has a dream of flying in the sky like a bird. For this purpose, people have tried a variety of ways to be able to fly in the sky for a long time. With the development of science and technology, the dream of flying in the sky became a reality. Most of the existing aircrafts are mainly applied to scientific research, which are enormously expensive and not suitable for public use. With the spread of the aircraft, a passenger-carrying aircraft of simplicity in operation and flexibility in use has emerged. However, the aircraft is poor in maneuverability at present, which is only suitable for flying under static condition, and cannot successfully switch between hovering flight, side flight, rotation and other flight conditions.

### SUMMARY

Based on above, the objective of the present disclosure is to provide a multi-rotor passenger-carrying aircraft to overcome the defects of the prior art, which can successfully switch between hovering flight, side flight, rotation and other flight conditions, with good maneuverability and controllability.

The present disclosure provides a multi-rotor passenger-carrying aircraft, including an aircraft body with a passenger-carrying cabin capable of carrying a person and at least three aircraft arms arranged on the aircraft body, wherein each of the at least three aircraft arms is provided with a first propeller arranged above the aircraft arm and driven to rotate by a first driving device, and a second propeller arranged below the aircraft arm and driven to rotate by a second driving device.

In one embodiment, a mounting base is arranged on the aircraft arm, the first driving device is connected between the first propeller and the mounting base, and the second driving device is connected between the second propeller and the mounting base.

In one embodiment, a sleeve is fastened on an end of the aircraft arm, and the mounting base is fastened in the sleeve.

In one embodiment, the direction of rotation of the first propeller driven by the first driving device is configured to be opposite to that of the second propeller driven by the second driving device on the same aircraft arm.

In one embodiment, the first propeller and the second propeller are vertically disposed on the same aircraft arm.

In one embodiment, a center axis of the first propeller lies on a same vertical line as a center axis of the second propeller on the same aircraft arm.

In one embodiment, the aircraft body is provided with an operable cabin door.

In one embodiment, a landing gear is arranged on the bottom of the aircraft body.

In one embodiment, a signal antenna is arranged on the top of the aircraft body, and a seat is arranged in the accommodating cabin.

In one embodiment, there are four aircraft arms arranged on the aircraft body symmetrically.

The advantages or principle of the above technical solution are illustrated below.

For the above multi-rotor passenger-carrying aircraft, at least three aircraft arms are arranged on the aircraft body, and two propellers are arranged respectively above and below each aircraft arm. In this way, it can effectively reduce the whole aircraft area through arranging propellers of smaller size above and below each aircraft arm instead of separately arranging a propeller of larger size on each aircraft arm in traditional means, while meeting the requirement of carrying capacity. Meanwhile, the multi-rotor passenger-carrying aircraft can implement various flight actions during flight through adjusting the rotate speed of the different driving devices respectively, which is convenient to control, and can successfully switch between hovering flight, side flight, rotation and other flight conditions, with good maneuverability and controllability.

### BRIEF DESCRIPTION OF THE DRAWINGS

FIG. 1 is a structural schematic diagram of a multi-rotor passenger-carrying aircraft according to one embodiment of the present disclosure.
FIG. 2 is a structural schematic diagram of a aircraft arm of a multi-rotor passenger-carrying aircraft according to one embodiment of the present disclosure.

### Description of reference signs:

1 a multi-rotor passenger-carrying aircraft, 2 aircraft arm, 3 first propeller, 4 second propeller, 5 first driving device, 5 second driving device, 10 accommodating cabin, 11 cabin door, 12 landing gear, 13 signal antenna, 14, seat, 20 mounting base, and 21 sleeve.

### DETAILED DESCRIPTION OF THE PREFERRED EMBODIMENTS

In the following description of embodiments, reference is made to the accompanying drawings which form a part hereof, and in which it is shown by way of illustration specific embodiments of the disclosure that can be practiced It is to be understood that other embodiments can be used and structural changes can be made without departing from the scope of the disclosed embodiments.

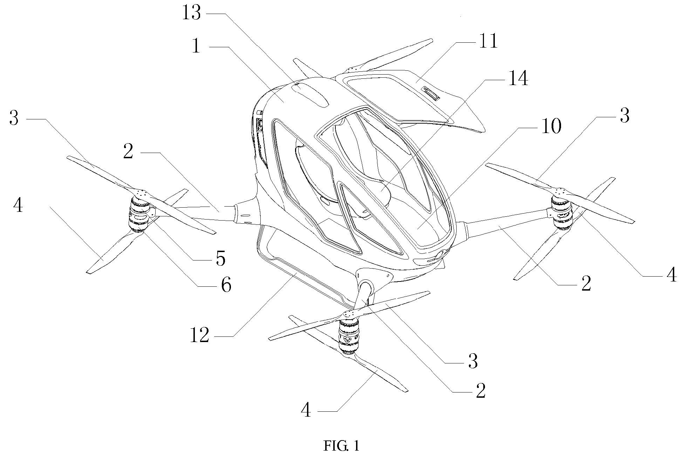

As shown in FIG. 1, a multi-rotor passenger-carrying aircraft is provided. The multi-rotor passenger-carrying aircraft includes an aircraft body 1 with a passenger-carrying cabin 10 capable of carrying a person and four aircraft arms 2 arranged on the aircraft body 1, wherein each of the at least three aircraft arms 2 is provided with a first propeller 3 arranged above the aircraft arm 2 and driven to rotate by a first driving device 5, and a second propeller 4 arranged below the aircraft arm 2 and driven to rotate by a second driving device 6. The above multi-rotor passenger-carrying aircraft has four aircraft arms 2 arranged on the aircraft body 1, with two propellers arranged respectively above and below each aircraft arm, and has totally eight propellers which can provide enough power for the multi-rotor passenger-carrying aircraft to maintain long-term flight compared with common single-axle aircraft or dual-axis aircraft. It can effectively reduce the whole aircraft area through arranging propellers of smaller size above and below each aircraft arm 2 instead of separately arranging a propeller of larger size on each aircraft arm 2 in traditional means, while meeting the requirement of carrying capacity. Meanwhile, the multi-rotor passenger-carrying aircraft can implement various flight actions during flight through adjusting the rotate speed of the different driving devices respectively, which is convenient to control, and can successfully switch between hovering flight, side flight, rotation and other flight conditions, with good maneuverability and controllability. It can be understood that the amount of the aircraft arms 2 can also be three or more, and preferably an even number.

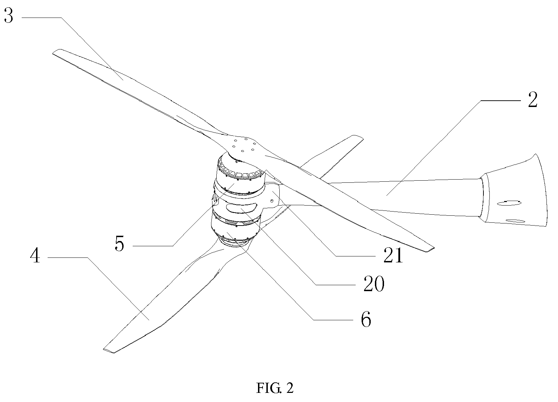

As shown in FIG. 2, a mounting base 20 is arranged on the aircraft arm 2, the first driving device 5 is connected between the first propeller 3 and the mounting base 20, and the second driving device 6 is connected between the second propeller 4 and the mounting base 20. The first propeller 3, the first driving device 5, the second propeller 4 and the second driving device 6 are fastened on the aircraft arm 2 through the mounting base 20. In this way, the installation and connection are simple, and the system assembly is more stable. It can achieve longer lasting flight by reducing the weight of the aircraft while guaranteeing the strength of the aircraft body 1.

In the embodiment, a sleeve 21 is fastened on an end of the aircraft arm 2, and the mounting base 20 is fastened in the sleeve 21. The mounting base 20 is embedded in the end of the aircraft arm 2, such that moment generated by the driving device can be reduce, and weight of the end of the aircraft arm can be minimized, to efficiently reduce the weight and increase the flight time. In other embodiments, the first propeller 3 and the second propeller 4 can also be fastened on other positions of the aircraft arm 2 according to practical requirements.

Preferably, the direction of rotation of the first propeller 3 driven by the first driving device 5 is configured to be opposite to that of the second propeller 4 driven by the second driving device 6 on the same aircraft arm, and the first propeller and the second propeller are vertically disposed on the same aircraft arm, such that the multi-rotor passenger-carrying aircraft can implement various flight actions during flight through adjusting the rotate speed of the different driving devices respectively, with good controllability, and it can achieve moment balance to make the flight more stable. A center axis of the first propeller 3 lies on a same vertical line as a center axis of the second propeller 4 on the same aircraft arm, such that it is easy for the multi-rotor passenger-carrying aircraft to maintain the flight altitude during changing direction, and the flight is safer.

As shown in FIG. 1, the aircraft body 1 is provided with an operable cabin door 11, through which a pilot can enters into the accommodating cabin for driving. A landing gear 12 is arranged on the bottom of the aircraft body 1 for the take-off and the landing of the multi-rotor passenger-carrying aircraft. A signal antenna 13 is arranged on the top of the aircraft body 1 for receiving signal. A seat 14 is arranged in the accommodating cabin 10 for the driving of the pilot.

In the embodiment, the first driving device 5 and the second driving device 6 are motors. It can be understood that the first driving device 5 and the second driving device 6 can also be other actuating units according to practical requirements.

Technical features of the above embodiments can be combined arbitrarily. For simplify and clarity, not all of the possible combinations of the technical features of the above embodiments are described, however, these combinations should be considered within the scope of the description provided that there is no contradiction therebetween.

The above are preferred embodiments of the present disclosure described in detail, and should not be deemed as limitations to the scope of the present disclosure. It should be noted that variations and improvements will become apparent to those skilled in the art to which the present disclosure pertains without departing from its spirit and scope. Therefore, the scope of the present disclosure is defined by the appended claims.

## Claims

1. A multi-rotor passenger-carrying aircraft, comprising an aircraft body with a passenger-carrying cabin and at least three aircraft arms arranged on the aircraft body, wherein each of the at least three aircraft arms is provided with a first propeller arranged above the aircraft arm and driven to rotate by a first driving device, and a second propeller arranged below the aircraft arm and driven to rotate by a second driving device.

2. The multi-rotor passenger-carrying aircraft of claim 1, wherein a mounting base is arranged on the aircraft arm, the first driving device is connected between the first propeller and the mounting base, and the second driving device is connected between the second propeller and the mounting base.

3. The multi-rotor passenger-carrying aircraft of claim 2, wherein a sleeve is fastened on an end of the aircraft arm, and the mounting base is fastened in the sleeve.

4. The multi-rotor passenger-carrying aircraft of claim 1, wherein the rotation direction of the first propeller driven by the first driving device is reverse to the rotation direction of the second propeller driven by the second driving device on the same aircraft arm.

5. The multi-rotor passenger-carrying aircraft of claim 1, wherein the first propeller and the second propeller are vertically disposed on the same aircraft arm.

6. The multi-rotor passenger-carrying aircraft of claim 1, wherein a center axis of the first propeller lies on a same vertical line with a center axis of the second propeller on the same aircraft arm.

7. The multi-rotor passenger-carrying aircraft of claim 1, wherein the aircraft body is provided with an operable cabin door.

8. The multi-rotor passenger-carrying aircraft of claim 1, wherein a landing gear is arranged at the bottom of the aircraft body.

9. The multi-rotor passenger-carrying aircraft of claim 1, wherein a signal antenna is arranged on the top of the aircraft body, and a seat is arranged in the accommodating cabin.

10. The multi-rotor passenger-carrying aircraft of any one of claims 1-9, wherein there are four aircraft arms arranged symmetrically on the aircraft body.
